# EUROPEAN PATENT SPECIFICATION

(11) **EP 2 582 111 B1**
(45) Date of publication and mention of the grant of the patent: **12.09.2018**
(21) Application number: 11811794.4
(22) Date of filing: 03.06.2011
(51) Int. Cl.: H04L 5/00, H04L 27/26

(54) **SIGNAL PROCESSING METHOD AND DEVICE FOR LONG TERM EVOLUTION (LTE) BASE STATION SIDE**
SIGNALVERARBEITUNGSVERFAHREN UND -VORRICHTUNG FÜR EINE LTE-BASISSTATIONSSEITE
PROCÉDÉ ET DISPOSITIF DE TRAITEMENT DE SIGNAL POUR CÔTÉ STATION DE BASE D'ÉVOLUTION À LONG TERME (LTE)

(30) Priority: 26.07.2010 CN 201010236162
(43) Date of publication of application: 17.04.2013
(73) Proprietor: ZTE Corporation, Shenzhen, Guangdong 518057 (CN)
(72) Inventor: XIANG, Jiying, Shenzhen Guangdong 518057 (CN); YOU, Aimin, Shenzhen Guangdong 518057 (CN); ZHAO, Xianming, Shenzhen Guangdong 518057 (CN); XIE, Daxiong, Shenzhen Guangdong 518057 (CN)
(74) Representative: Lavoix
(86) International application number: PCT/CN2011/075326
(87) International publication number: WO 2012/013092

(56) References cited:
- CN-A- 1 801 673
- CN-A- 101 079 862
- CN-A- 101 437 010
- CN-A- 101 465 834
- CN-A- 101 588 653
- CN-A- 101 753 181
- CN-A- 101 895 503

## Description

### TECHNICAL FIELD

The disclosure belongs to the technical field of wireless communications, and in particular to a signal processing method and device for a Long Term Evolution (LTE) wireless base station side.

### BACKGROUND

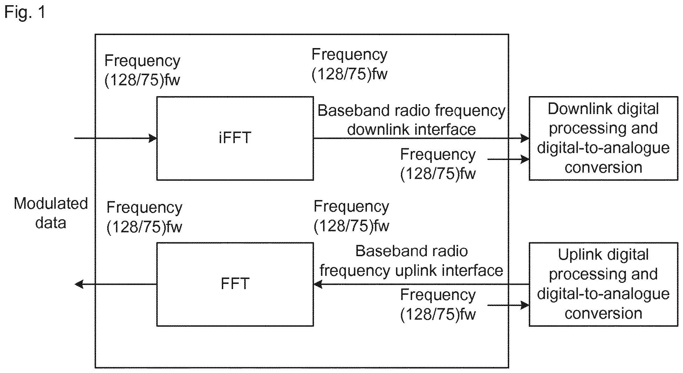

According to the 3GPP standard, both the LTE uplink and downlink adopt over-sampling; a traditional base station side device is shown in Fig. 1, modulated data downwards enters an Inverse Fast Fourier Transformation (IFFT) processing unit, and the unit performs the IFFT of the integral power of 2; according to the standard, if the bandwidth of the LTE is fw (fw=1.4M, 3M, 5M, 10M, 15M or 20M), then an iFFT module operates at (128/75)*fw, and there is a guard band in frequency domain. Similarly, for the uplink, a Fast Fourier Transformation (FFT) module operates at (128/75)*fw, and there is a guard band provided in frequency domain.

CN101753181A discloses a data transmission method for reducing the data quantity transmitted between RRU and BBU, comprising: radio remote unit RRU eliminating the redundant signal, filtering with the radio frequency signal and obtaining the random access channel PARCH signal; and the RRU sending the signal in which the redundant signal is eliminated and the PARCH signal to the baseband unit BBU.

CN101588653A provides a radio remote system, comprising: a remote end module for converting between an analog radio-frequency signal and a baseband signal and processing the redundancy in the baseband signal; and a near end module for performing baseband processing on the baseband signal of which the redundancy is processed, so as to reduce data transmitted between the remote end module and the near end module and reduce the wire transmission quantity.

The above traditional solution is disadvantaged in that data of the baseband radio frequency interface is large and proportional to (128/75)*fw.

At present, there is an improved solution, namely a sub-carrier compression method; by the method, the IFFT and FFT is shifted from a baseband side to a radio frequency side, such that the transmission rate of a baseband and radio frequency interface can be reduced to fw, which means that guard band information is not transmitted on the interface, thereby achieving the aim of reducing the interface rate. However, the sub-carrier compression method has the following disadvantages:
1. since the IFFT and FFT functions are shifted from the baseband side to the radio frequency side, the complexity of the radio frequency side is greatly increased, which is not beneficial to the maintenance and reliability of a remote radio frequency unit;
2. since the IFFT and FFT functions are shifted from the baseband side to the radio frequency side, the baseband needs to transmit a large amount of configuration data to the radio frequency unit, which increases the complexity;
3. since the Physical Random Access Channel (PRACH) processing is needed to be prior to the FFT, it is also needed to move the PRACH processing from the baseband side to the radio frequency side, which further increases the design complexity of the radio frequency and interface.

The sub-carrier compression method has never been applied commercially since it was presented because of its complexity.

### SUMMARY

The technical problem to be solved by the disclosure is to provide a signal processing method and device for an LTE base station side aiming at the problems of the prior art, which can effectively reduce the transmission rate of a baseband radio frequency interface without increasing the complexity at a radio frequency side.

For solving above technical problem, the signal processing method for an LTE base station side of the disclosure includes the following steps:
in a downlink signal direction, filtering downlink signals at a baseband side to remove high frequency sub-carrier components, and extracting signals from filtered signals with an extracting frequency fsd, and then making the extracted signals enter a baseband radio frequency downlink interface, wherein fw≤fsd<(128/75)*fw, and the fw is a frequency spectrum bandwidth of the LTE and is equal to 1.4M, 3M, 5M, 10M, 15M or 20M according to the 3GPP standard;
in an uplink signal direction, performing interpolation on signals whose frequency is fsu which are from a baseband radio frequency uplink interface at the baseband side to increase a signal frequency, so as to adapt to the subsequent LTE signal processing flow, and filtering the interpolated signals to add high frequency sub-carrier components, that is, adding a guard band to signals, wherein fw≤fsu<(128/75)*fw.

Furthermore, the filtering in the uplink signal direction may be adding high frequency sub-carrier components by adding 0 to high frequency sub-carriers.

Furthermore, the method of the disclosure has two specific implementation solutions; the first solution may include the following specific steps:
in the downlink signal direction, first performing frequency domain inverse transformation on modulated data to transform signals from frequency domain to time domain, and then performing the downlink signal filtering processing and the extracting processing, after that, sending signals to the baseband radio frequency downlink interface; and
in the uplink signal direction, first performing interpolation on signals which are from the baseband radio frequency uplink interface, and then performing the uplink signal filtering processing, and performing frequency domain transformation to transform the signals from time domain to frequency domain.

Furthermore, the frequency domain inverse transformation may refer to IFFT, and the frequency domain transformation may refer to FFT.

The second solution may include the following specific steps:
in the downlink signal direction, first performing the downlink signal filtering processing on modulated data, and then performing frequency domain inverse transformation to transform signals from frequency domain to time domain, and performing the extracting processing, after that, sending signals to the baseband radio frequency downlink interface; and
in the uplink signal direction, first performing the interpolation on signals which are from the baseband radio frequency uplink interface, and then performing frequency domain transformation to transform the signals from time domain to frequency domain, and then performing the uplink signal filtering processing.

The main difference between the two specific implementation solutions provided by the disclosure is that the first solution implements filtering in time domain and the second solution implements filtering in frequency domain; users can select one from the two solutions to use according to actual needs.

For solving above technical problem, a signal processing device for an LTE base station side of the disclosure includes:
a downlink filter, an extractor, an interpolator, an uplink filter, a frequency domain inverse transformation module and a frequency domain transformation module, all of which are set at the baseband side;
wherein, the downlink filter, the interpolator and the frequency domain inverse transformation module are set in a downlink signal direction; the downlink filter is configured to filter downlink signals to remove high frequency sub-carrier components; the extractor is configured to extract signals from filtered signals with extracting frequency fsd, wherein the extracted signals enter a baseband radio frequency downlink interface, wherein, fw≤fsd<(128/75)*fw, and fw is a frequency spectrum bandwidth of the LTE and is equal to 1.4M, 3M, 5M, 10M, 15M or 20M according to the 3GPP standard; the frequency domain inverse transformation module is configured to transform signals from frequency domain to time domain;
the interpolator, the uplink filter and the frequency domain transformation module are set in an uplink signal direction; the interpolator is configured to perform interpolation on signals whose frequency is fsu which are from a baseband radio frequency uplink interface to increase a signal frequency, so as to adapt to the subsequent LTE signal processing flow; the uplink filter is configured to filter interpolated uplink signals to add high frequency sub-carrier components, that is, adding a guard band to signals; the frequency domain transformation module is configured to transform signals from time domain to frequency domain, wherein fw≤fsu<(128/75)*fw.

Furthermore, the signal uplink filter may add the high frequency sub-carrier components by adding 0 to high frequency sub-carriers.

Furthermore, the device of the disclosure has two specific implementation solutions; the first solution is:
in the downlink signal direction, the frequency domain inverse transformation module, the downlink filter and the extractor are set in order; and
in the uplink signal direction, the interpolator, the uplink filter and the frequency domain transformation module are set in order.

Furthermore, the frequency domain inverse transformation module adopts IFFT to implement the frequency domain inverse transformation function, and the frequency domain transformation module adopts FFT to implement the frequency domain transformation function.

The second solution is:
in the downlink signal direction, the downlink filter, the frequency domain inverse transformation module and the extractor are set in order; and
in the uplink signal direction, the interpolator, the frequency domain transformation module, and the uplink filter are set in order.

In the process of processing signals at the LTE base station side in the disclosure, in a downlink signal direction, modulated data are filtered at the baseband side and signals are extracted from the filtered signals, thereby effectively reducing the transmission rate of a baseband radio frequency downlink interface; in an uplink signal direction, interpolation is performed on signals which are from a baseband radio frequency uplink interface to increase the signal frequency, so as to adapt to the subsequent LTE signal processing flow, for example, adapting to an uplink filtering operation; and in the uplink signal direction, the interpolated signals are filtered to add high frequency sub-carrier components, namely adding a guard band; since it is not necessary to transmit high frequency guard band components on the baseband radio frequency uplink interface, the rate of the baseband radio frequency uplink interface is reduced. Thus, the disclosure effectively reduces the transmission rate of the baseband radio frequency interface, which becomes minimally 75/128 under the situation of adopting the 3GPP standard; at the same time, it is not necessary to newly add FFT, IFFT, PRACH or other functions to the radio frequency part, or add related control and synchronous interfaces to the baseband radio frequency interface, thereby the disclosure does not influence the interface function partition of baseband radio frequency, and keeps the simplicity of a radio frequency unit.

### BRIEF DESCRIPTION OF THE DRAWINGS

Fig. 1 shows a block diagram of traditional LTE sampling processing;
Fig. 2 shows a flowchart of the first specific implementation solution of a method in the disclosure;
Fig. 3 shows a flowchart of the second specific implementation solution of a method in the disclosure;
Fig. 4 shows a structural diagram of the first specific implementation solution of a device in the disclosure; and
Fig. 5 shows a structural diagram of the second specific implementation solution of a device in the disclosure.

### DETAILED DESCRIPTION

The disclosure is further described below with reference to the accompanying drawings and embodiments in detail.

The signal processing method fo an LTE base station side of the disclosure includes the following steps:
in a downlink signal direction, downlink signals are filtered at the baseband side to remove the high frequency sub-carrier components, namely removing the guard band, and signals are extracted from filtered signals with the extracting frequency fsd, and the extracted signals (i.e. the signals whose frequencies are between 0 and fsd) enter the baseband radio frequency downlink interface, wherein fw≤fsd<(128/75)*fw, and fw is the frequency spectrum bandwidth of the LTE and is equal to 1.4M, 3M, 5M, 10M, 15M or 20M according to the 3GPP standard.

The fsd is required to be greater than or equal to fw, because the transmitted data are required to include the effective sub-carriers; the fsd can be less than (128/75)*fw, because the high frequency sub-carrier components have been removed.

The fsd can be equal to fw minimally; when fsd is equal to fw, the transmission rate of the baseband radio frequency downlink interface is reduced to 75/128 under the situation of adopting the 3GPP standard.

In consideration of sharing the baseband radio frequency interface with WCDMA or other standard systems, it is allowed to adjust fw, for example, taking a frequency which is synchronous with GSM and WCDMA data, like an integral multiple of 3.84M; for CDMA, an integral multiple of 1.2288M is available; for TD-SCDMA, an integral multiple of 1.28M is available; for the situation that all above standards coexist, an integral multiple of 3.84M is available.

The filtered and extracted signals enter the baseband radio frequency downlink interface which has a frequency fsd. Thus, the baseband radio frequency downlink interface achieves the aim of rate reduction; a downlink digital processing and digital-to-analogue conversion unit operates at lower frequency fsd.

In an uplink signal direction, interpolation is performed on signals which have a frequency fsu and are from the baseband radio frequency uplink interface to increase the signal frequency, so as to adapt to the requirement of the subsequent LTE signal processing flow, for example, adapting to the requirement of uplink filtering; and the interpolated signals are filtered to add the high frequency sub-carrier components, wherein fw≤fsu<(128/75)*fw.

The fsu is required to be greater than or equal to fw, it is because the transmitted data are required to include the effective sub-carriers; fsu can be less than (128/75)*fw, it is because the high frequency sub-carrier components have not existed in the baseband radio frequency uplink interface.

The fsu can be equal to fw minimally; when fsu is equal to fw, the transmission rate of the baseband radio frequency uplink interface is reduced to 75/128 under the situation of adopting the 3GPP standard.

In consideration of sharing the baseband radio frequency interface with WCDMA or other standard systems, it is allowed to adjust fw; for example, taking a frequency which is synchronous with GSM and WCDMA data, like an integral multiple of 3.84M; for CDMA, an integral multiple of 1.2288M is available; for TD-SCDMA, an integral multiple of 1.28M is available; for the situation that all above standards coexist, an integral multiple of 3.84M is available.

The method of the disclosure has two specific implementation solutions; the two solutions are specifically described below, respectively.

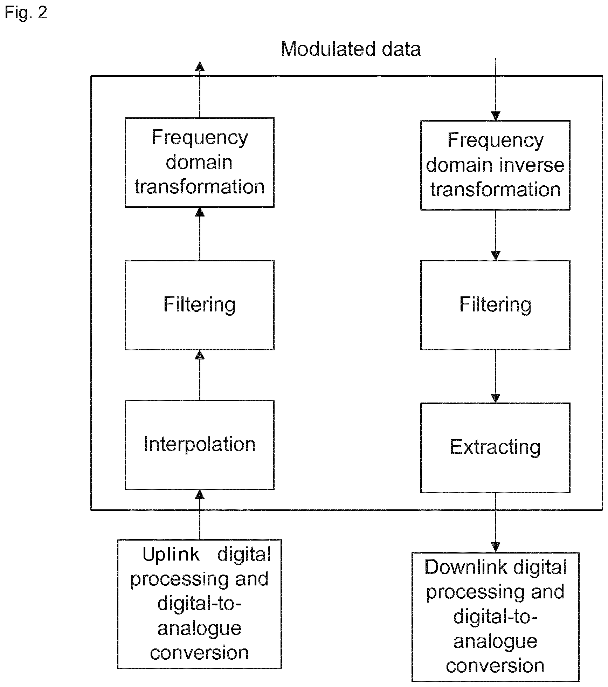

Fig. 2 shows a flowchart of the first specific implementation solution of a method in the disclosure; as shown in Fig. 2, the first specific implementation solution of the method in the disclosure includes the following steps:
in a downlink signal direction, first the frequency domain inverse transformation is performed on modulated data to transform the signals from frequency domain to time domain, and then the downlink signals are filtered and signals are extracted from the filtered signals, after that, the signals are sent to the baseband radio frequency downlink interface;
in the solution, the filtering in the downlink signal direction is performed in time domain, and the downlink filtering is implemented by adopting the SINC convolution function in time domain (which is equivalent to the rectangular function in frequency domain). Certainly, the time domain fillers in other forms can also be adopted, provided that the high frequency guard band can be removed.

In an uplink signal direction, first interpolation is performed on the signals which are from the baseband radio frequency uplink interface, and then the uplink signals are filtered, and the frequency domain transformation is performed to transform the signals from time domain to frequency domain.

In the solution, the filtering in the uplink signal direction refers to adding ineffective high frequency components (guard band components) in time domain to facilitate the subsequent processing. A typical method is adding 0 to the high frequency sub-carriers; certainly, other feasible methods can also be adopted.

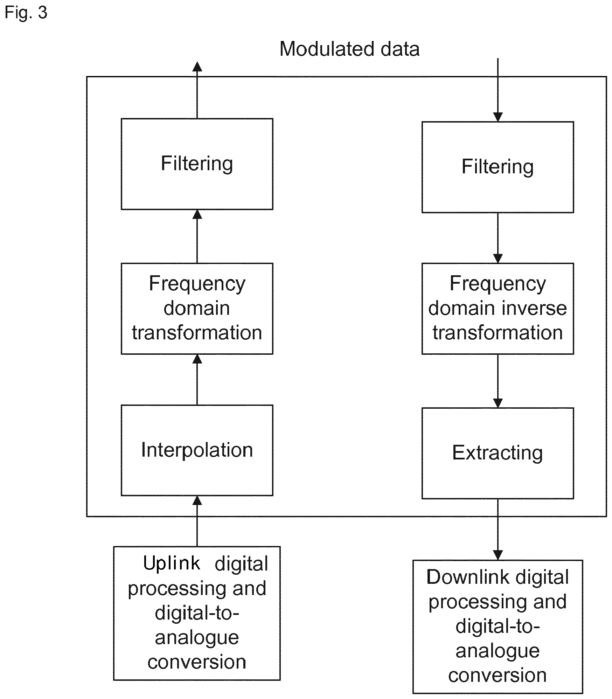

Fig. 3 shows a flowchart of the second specific implementation solution of a method in the disclosure; as shown in Fig. 3, the second specific implementation solution of the method in the disclosure includes the following steps:
in a downlink signal direction, first the downlink signal filtering processing is performed on modulated data, and then the frequency domain inverse transformation is performed to transform the signals from frequency domain to time domain, and extracting processing is performed, after that, the signals are sent to the baseband radio frequency downlink interface;
in the solution, the filtering in the downlink signal direction is performed in frequency domain, namely the high frequency sub-carrier component are removed in frequency domain.

In an uplink signal direction, first interpolation is performed on the signals which are from the baseband radio frequency uplink interface, and then the frequency domain transformation is performed to transform the signals from time domain to frequency domain, and the uplink signal filtering processing is performed.

In the solution, the filtering in the uplink signal direction refers to adding ineffective high frequency components in frequency domain to facilitate the subsequent processing. A typical method is adding 0 to the high frequency sub-carriers; certainly, other feasible methods can also be adopted.

In the solution, the processing point number of frequency domain transformation and frequency domain inverse transformation is not equal to the value (2048 or 1024 or 512) specified by the 3GPP standard, but less than the value (2048 or 1024 or 512) specified by the standard and greater than the number of effective sub-carries; the processing point number is not necessarily an integral power of 2. If it is not an integral power of 2, the fast algorithm (e.g. FFT or iFFT) cannot be adopted, but the non-fast algorithm (e.g. DFT or iDFT) is adopted.

The main difference between the two specific implementation solutions of the method in the disclosure is that the first solution implements filtering in time domain and the second solution implements filtering in frequency domain; users can select one from the two solutions to use according to specific needs.

A signal processing device for an LTE base station side of the disclosure is described below in detail.

The signal processing device for an LTE base station side of the disclosure includes a downlink filter, an extractor, an interpolator, an uplink filter, and a frequency domain inverse transformation module and a frequency domain transformation module, all of which are set at a baseband side.

The downlink filter, the interpolator and the frequency domain inverse transformation module are set in a downlink signal direction; the downlink filter is configured to filter downlink signals to remove high frequency sub-carrier components; the extractor is configured to extract signals from the filtered signals with extracting frequency fsd, and wherein the extracted signals (i.e. the signals whose frequencies are between 0 and fsd) enter the baseband radio frequency downlink interface, wherein fw≤fsd<(128/75)*fw, and fw is the frequency spectrum bandwidth of the LTE and is equal to 1.4M, 3M, 5M, 10M, 15M or 20M according to the 3GPP standard; the frequency domain inverse transformation module is configured to transform signals from frequency domain to time domain.

The fsd are required to be greater than or equal to fw, it is because the transmitted data are required to include the effective sub-carriers; but fsd can be less than (128/75)*fw, it is because the high frequency sub-carrier components have been removed.

The fsd can be equal to fw minimally; when fsd is equal to fw, the transmission rate of the baseband radio frequency downlink interface is reduced to 75/128 under the situation of adopting the 3GPP standard.

In consideration of sharing the baseband radio frequency interface with WCDMA or other standard systems, it is allowed to adjust fw; for example, taking a frequency which is synchronous with GSM and WCDMA data, like an integral multiple of 3.84M; for CDMA, an integral multiple of 1.2288M is available; for TD-SCDMA, an integral multiple of 1.28M is available; for the situation that all above standards coexist, an integral multiple of 3.84M is available.

The filtered and extracted signals enter the baseband radio frequency downlink interface at frequency fsd. Thus, the baseband radio frequency downlink interface achieves the aim of rate reduction; a downlink digital processing and digital-to-analogue conversion unit operates at the lower frequency fsd.

The interpolator, the uplink filter and the frequency domain transformation module are set in the uplink signal direction; the interpolator is configured to perform interpolation on signals which have frequency fsu and are from the baseband radio frequency uplink interface to increase the signal frequency, for example, increasing to (128/75)*fw, so as to facilitate the subsequent filtering; the uplink filter is configured to filter the interpolated uplink signals to add high frequency sub-carrier components; the frequency domain transformation module is configured to transform signals from time domain to frequency domain, wherein fw≤fsu<(128/75)*fw.

The Fsu are required to be greater than or equal to fw, it is because the transmitted data are required to include the effective sub-carriers; but fsu can be less than (128/75)*fw, it is because the high frequency sub-carrier components have not existed in the baseband radio frequency uplink interface.

The fsu can be equal to fw minimally; when fsu is equal to fw, the transmission rate of the baseband radio frequency uplink interface is reduced to 75/128 under the situation of adopting the 3GPP standard.

In consideration of sharing the baseband radio frequency interface with WCDMA or other standard systems, it is allowed to adjust fw, for example, taking a frequency which is synchronous with GSM and WCDMA data, like an integral multiple of 3.84M; for CDMA, an integral multiple of 1.2288M is available; for TD-SCDMA, an integral multiple of 1.28M is available; for the situation that all above standards coexist, an integral multiple of 3.84M is available.

The device of the disclosure has two specific implementation solutions; the two solutions are described below, respectively.

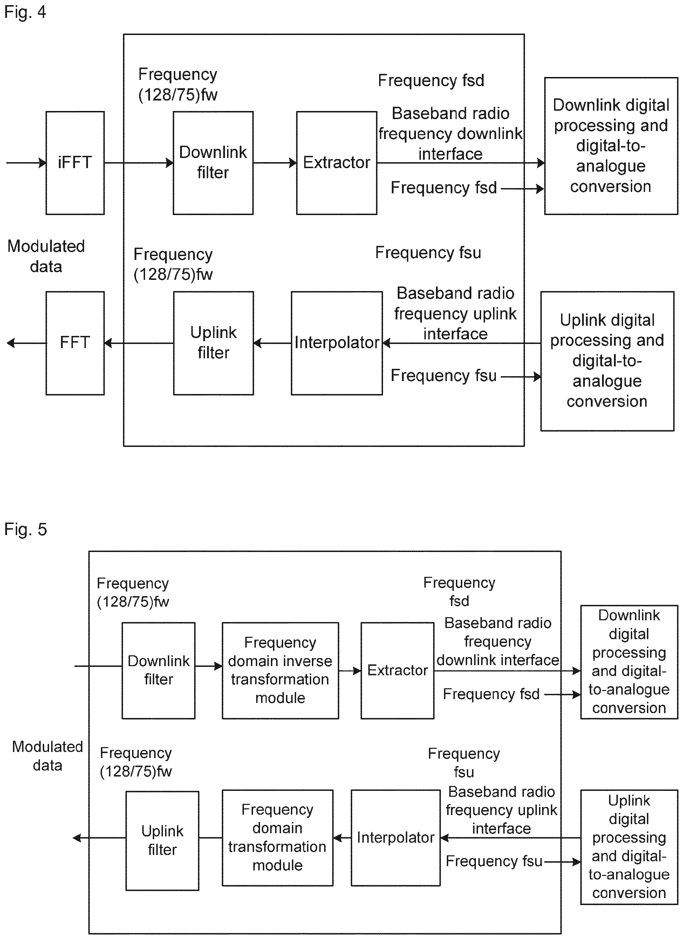

Fig. 4 shows a structural diagram of the first specific implementation solution of a device in the disclosure; as shown in Fig. 4, in the first solution, the structure of the device in the disclosure is as follows:
in the downlink signal direction, the frequency domain inverse transformation module, the downlink filter and the extractor are set in order; and
in the uplink signal direction, the interpolator, the uplink filter and the frequency domain transformation module are set in order.

In the embodiment, the frequency domain inverse transformation module adopts IFFT to implement the frequency domain inverse transformation function, and the frequency domain transformation module adopts FFT to implement the frequency domain transformation function.

In the solution, the filtering in the downlink signal direction is performed in time domain, and the downlink filtering is implemented by adopting the SINC convolution function in time domain (which is equivalent to the rectangular function in frequency domain). Certainly, the time domain fillers in other forms can also be adopted, provided that the high frequency guard band can be removed.

In the solution, the filtering in the uplink signal direction refers to adding ineffective high frequency components (guard band components) in time domain to facilitate the subsequent processing. A typical method is adding 0 to the high frequency sub-carriers; certainly, other feasible methods can also be adopted.

Fig. 5 shows a structural diagram of the second specific implementation solution of a device in the disclosure; as shown in Fig. 5, in the second solution, the structure of the device in the disclosure is as follows:
in the downlink signal direction, the downlink filter, the frequency domain inverse transformation module and the extractor are in order; and
in the uplink signal direction, the interpolator, the frequency domain transformation module and the uplink filter are set in order.

In the solution, the filtering in the downlink signal direction is performed in frequency domain, namely the high frequency sub-carrier components are removed in frequency domain.

In the solution, the filtering in the uplink signal direction is adding ineffective high frequency components in frequency domain to facilitate the subsequent processing. A typical method is adding 0 to the high frequency sub-carriers; certainly, other feasible methods can also be adopted.

In the solution, the processing point number of the frequency domain transformation module and the frequency domain inverse transformation module is not equal to the value (2048 or 1024 or 512) specified by the 3GPP standard, but less than the value (2048 or 1024 or 512) specified by the standard and greater than the number of effective sub-carries; the processing point number is not necessarily an integral power of 2. If it is not an integral power of 2, the fast algorithm (e.g. FFT or IFFT) cannot be adopted, but the non-fast algorithm (e.g. DFT or IDFT) is adopted.

The core idea of the disclosure is to achieve the aim of reducing the transmission rate of the baseband radio frequency interface, and minimally reducing to 75/128 under the situation of adopting the 3GPP standard without influencing the signal quality, by removing the guard band energy of signals at the baseband side through filtering and by reducing the frequency through extraction. At the same time, the method does not influence the interface function partition of baseband radio frequency, thus keeping the simplicity of the radio frequency unit.

The above specific embodiments further describe the aim, the technical solutions and the beneficial effects of the disclosure in detail; it should be noted that, the above is only the specific embodiments of the disclosure; the skilled personnel in the field can make various modifications and equivalent replacements on the disclosure without departing from the scope and spirit of the disclosure. Thus, provided these modifications and equivalent replacements of the disclosure belong to the scope of the technical solutions and equivalent technologies recorded in the claims of the disclosure, the disclosure is intended to include these modifications and equivalent replacements.

## Claims

1. A signal processing method for a Long Term Evolution, LTE, base station side, **characterised in that**, comprising:
in a downlink signal direction from a baseband side to a radio frequency side, filtering downlink signals at the baseband side to remove high frequency sub-carrier components, and extracting signals from the filtered signals with extracting frequency fsd, and then making the extracted signals enter a baseband radio frequency downlink interface, wherein fw≤fsd<(128/75)*fw, and the fw is a frequency spectrum bandwidth of the LTE; and
in an uplink signal direction from the radio frequency side to the baseband side, performing at the baseband side interpolation on signals whose frequency is fsu which are from a baseband radio frequency uplink interface, filtering the interpolated signals to add high frequency sub-carrier components, wherein fw≤fsu<(128/75)*fw.

2. The signal processing method for an LTE base station side according to claim 1, wherein the filtering the interpolated signals to add high frequency sub-carrier components is: adding high frequency sub-carrier components by adding 0 to high frequency sub-carriers.

3. The signal processing method for an LTE base station side according to claim 1 or 2, wherein the method specifically comprises:
in the downlink signal direction, first performing frequency domain inverse transformation on modulated data, then performing the downlink signal filtering processing and the extracting processing, and then sending signals to the baseband radio frequency downlink interface; and
in the uplink signal direction, first performing the interpolation on signals which are from the baseband radio frequency uplink interface, then performing the interpolated uplink signal filtering processing, and then performing frequency domain transformation.

4. The signal processing method for an LTE base station side according to claim 3, wherein,
the frequency domain inverse transformation is Inverse Fast Fourier Transformation, IFFT, and the frequency domain transformation is Fast Fourier Transformation, FFT.

5. The signal processing method for an LTE base station side according to claim 1 or 2, wherein the method comprises:
in the downlink signal direction, first performing the downlink signal filtering processing on modulated data, then performing frequency domain inverse transformation and performing the extracting processing, and then sending signals to the baseband radio frequency downlink interface; and
in the uplink signal direction, first performing the interpolation on signals which are from the baseband radio frequency uplink interface, then performing frequency domain transformation, and then performing the interpolated uplink signal filtering processing.

6. A signal processing device for a Long Term Evolution, LTE, base station side, **characterised in that**, comprising: a downlink filter, an extractor, an interpolator, an uplink filter, a frequency domain inverse transformation module and a frequency domain transformation module; wherein the downlink filter, the interpolator and the frequency domain inverse transformation module are set at a baseband side in a downlink signal direction from the baseband side to a radio frequency side; and the interpolator, the uplink filter and the frequency domain transformation module are set at the baseband side in an uplink signal direction from the radio frequency side to the baseband side;
wherein the frequency domain inverse transformation module is configured to transform signals from frequency domain to time domain;
the downlink filter is configured to filter the transformed signals to remove high frequency sub-carrier components;
the extractor is configured to extract signals from the filtered signals with extracting frequency fsd, wherein the extracted signals enter a baseband radio frequency downlink interface; wherein fw≤fsd<(128/75)*fw, and the fw is a frequency spectrum bandwidth of the LTE;
the interpolator is configured to perform interpolation on signals whose frequency is fsu which are from a baseband radio frequency uplink interface; the uplink filter is configured to filter the interpolated uplink signals to add high frequency sub-carrier components; and
the frequency domain transformation module is configured to transform the filtered signals from time domain to frequency domain, wherein fw≤fsu<(128/75)*fw.

7. The signal processing device for an LTE base station side according to claim 6, wherein,
the uplink filter filtering the interpolated uplink signals to add the high frequency sub-carrier components is: adding the high frequency sub-carrier components by adding 0 to high frequency sub-carriers.

8. The signal processing device for an LTE base station side according to claim 6 or 7, wherein,
in the downlink signal direction, the frequency domain inverse transformation module, the downlink filter and the extractor are set in order; and
in the uplink signal direction, the interpolator, the uplink filter and the frequency domain transformation module are set in order.

9. The signal processing device for an LTE base station side according to claim 8, wherein,
the frequency domain inverse transformation module adopts Inverse Fast Fourier Transformation, IFFT, to implement a frequency domain inverse transformation function, and the frequency domain transformation module adopts Fast Fourier Transformation, FFT, to implement a frequency domain transformation function.

10. The signal processing device for an LTE base station side according to claim 6 or 7, wherein,
in the downlink signal direction, the downlink filter, the frequency domain inverse transformation module and the extractor are set in order; and
in the uplink signal direction, the interpolator, the frequency domain transformation module and the uplink filter are set in order.

## Patentansprüche

1. Signalverarbeitungsverfahren für eine LTE (Long Term Evolution)-Basisstationsseite, **dadurch gekennzeichnet, dass** es umfasst:
Filtern in einer Downlink-Signalrichtung von einer Basisbandseite zu einer Funkfrequenzseite von Downlink-Signalen auf der Basisbandseite zum Entfernen von Hochfrequenz-Unterträgerkomponenten und Extrahieren von Signalen aus den gefilterten Signalen mit einer Extraktionsfrequenz fsd, und anschließendes Bewirken, dass die extrahierten Signale in eine Basisband-Funkfrequenz-Downlink-Schnittstelle eintreten, wobei fw ≤ fsd < (128/75) * fw, und fw eine Frequenzspektrumbandbreite in LTE ist; und
Durchführen in einer Uplink-Signalrichtung von der Funkfrequenzseite zur Basisbandseite auf der Basisbandseite von Interpolation an Signalen, deren Frequenz fsu ist und die von einer Basisband-Funkfrequenz-Uplink-Schnittstelle sind, und Filtern der interpolierten Signale zum Addieren von Hochfrequenz-Unterträgerkomponenten, wobei fw ≤ fsu < (128/75) * fw.

2. Signalverarbeitungsverfahren für eine LTE-Basisstationsseite nach Anspruch 1, wobei es sich bei dem Filtern der interpolierten Signale zum Addieren von Hochfrequenz-Unterträgerkomponenten um Folgendes handelt: Addieren von Hochfrequenz-Unterträgerkomponenten durch Addieren von 0 zu Hochfrequenz-Unterträgern.

3. Signalverarbeitungsverfahren für eine LTE-Basisstationsseite nach Anspruch 1 oder 2, wobei das Verfahren insbesondere umfasst:
in der Downlink-Signalrichtung zunächst Durchführen von Frequenzdomänen-Rücktransformation an modulierten Daten, dann Durchführen der Downlink-Signalfilterverarbeitung und der Extraktionsverarbeitung und danach Senden von Signalen an die Basisband-Funkfrequenz-Downlink-Schnittstelle; und
in der Uplink-Signalrichtung zunächst Durchführen der Interpolation an Signalen, die von der Basisband-Funkfrequenz-Uplink-Schnittstelle sind, dann Durchführen der Filterverarbeitung der interpolierten Uplink-Signale und danach Durchführen von Frequenzdomänentransformation.

4. Signalverarbeitungsverfahren für eine LTE-Basisstationsseite nach Anspruch 3, wobei
die Frequenzdomänen-Rücktransformation schnelle Fourier-Rücktransformation, IFFT, ist, und die Frequenzdomänentransformation schnelle Fourier-Transformation, FFT, ist.

5. Signalverarbeitungsverfahren für eine LTE-Basisstationsseite nach Anspruch 1 oder 2, wobei das Verfahren umfasst:
in der Downlink-Signalrichtung zunächst Durchführen der Downlink-Signalfilterverarbeitung an modulierten Daten, dann Durchführen von Frequenzdomänen-Rücktransformation und Durchführen der Extraktionsverarbeitung und danach Senden von Signalen an die Basisband-Funkfrequenz-Downlink-Schnittstelle; und
in der Uplink-Signalrichtung zunächst Durchführen der Interpolation an Signalen, die von der Basisband-Funkfrequenz-Uplink-Schnittstelle sind, dann Durchführen von Frequenzdomänentransformation und danach Durchführen der Filterverarbeitung der interpolierten Uplink-Signale.

6. Signalverarbeitungsvorrichtung für eine LTE (Long Term Evolution)-Basisstationsseite, **dadurch gekennzeichnet, dass** sie umfasst: ein Downlink-Filter, einen Extraktor, einen Interpolator, ein Uplink-Filter, ein Frequenzdomänen-Rücktransformationsmodul und ein Frequenzdomänen-Transformationsmodul; wobei das Downlink-Filter, der Interpolator und das Frequenzdomänen-Rücktransformationsmodul auf einer Basisbandseite in einer Downlink-Signalrichtung von der Basisbandseite zu einer Funkfrequenzseite eingerichtet sind; und der Interpolator, das Uplink-Filter und das Frequenzdomänen-Transformationsmodul auf der Basisbandseite in einer Uplink-Signalrichtung von der Funkfrequenzseite zur Basisbandseite eingerichtet sind;
wobei das Frequenzdomänen-Rücktransfromationsmodul zum Transformieren von Signalen von der Frequenzdomäne in die Zeitdomäne konfiguriert ist;
das Downlink-Filter zum Filtern der transformierten Signale zum Entfernen von Hochfrequenz-Unterträgerkomponenten konfiguriert ist;
der Extraktor zum Extrahieren von Signalen aus den gefilterten Signalen mit einer Extraktionsfrequenz fsd konfiguriert ist, wobei die extrahierten Signale in eine Basisband-Funkfrequenz-Downlink-Schnittstelle eintreten;
wobei fw ≤ fsd < (128/75) * fw, und fw eine Frequenzspektrumbandbreite von LTE ist;
der Interpolator zum Durchführen von Interpolation an Signalen konfiguriert ist, deren Frequenz fsu ist und die von einer Bassband-Funkfrequenz-Uplink-Schnittstelle sind;
das Uplink-Filter zum Filtern der interpolierten Uplink-Signale zum Addieren von Hochfrequenz-Unterträgerkomponenten konfiguriert ist; und
das Frequenzdomänen-Transformationsmodul zum Transformieren der gefilterten Signale von der Zeitdomäne in die Frequenzdomäne konfiguriert ist, wobei fw ≤ fsu < (128/75) * fw.

7. Signalverarbeitungsvorrichtung für eine LTE-Basisstationsseite nach Anspruch 6, wobei
es sich bei dem Filtern der interpolierten Uplink-Signale durch das Uplink-Filter zum Addieren der Hochfrequenz-Unterträgerkomponenten um Folgendes handelt: Addieren der Hochfrequenz-Unterträgerkomponenten durch Addieren von 0 zu Hochfrequenz-Unterträgern.

8. Signalverarbeitungsvorrichtung für eine LTE-Basisstationsseite nach Anspruch 6 oder 7, wobei
in der Downlink-Signalrichtung das Frequenzdomänen-Rücktransformationsmodul, das Downlink-Filter und der Extraktor in Reihenfolge eingerichtet sind; und
in der Uplink-Signalrichtung der Interpolator, das Uplink-Filter und das Frequenzdomänen-Transformationsmodul in Reihenfolge eingerichtet sind.

9. Signalverarbeitungsvorrichtung für eine LTE-Basisstationsseite nach Anspruch 8, wobei
das Frequenzdomänen-Rücktransformationsmodul schnelle Fourier-Rücktransformation, IFFT, zum Implementieren einer Frequenzdomänen-Rücktransformationsfunktion anwendet, und das Frequenzdomänen-Transformationsmodul schnelle Fourier-Transformation, FFT, zum Implementieren einer Frequenzdomänen-Transformation anwendet.

10. Signalverarbeitungsvorrichtung für eine LTE-Basisstationsseite nach Anspruch 6 oder 7, wobei
in der Downlink-Signalrichtung das Downlink-Filter, das Frequenzdomänen-Rücktransformationsmodul und der Extraktor in Reihenfolge eingerichtet sind; und
in der Uplink-Signalrichtung der Interpolator, das Frequenzdomänen-Transformationsmodul und das Uplink-Filter in Reihenfolge eingerichtet sind.

## Revendications

1. Procédé de traitement de signal pour un côté de station de base à technologie d'évolution à long terme, LTE, **caractérisé en ce qu'**il comprend les étapes ci-dessous consistant à :
dans une direction de signal de liaison descendante, d'un côté de bande de base à un côté de radiofréquence, filtrer des signaux de liaison descendante au niveau du côté de bande de base en vue d'éliminer des composantes de sous-porteuse à haute fréquence, et extraire des signaux des signaux filtrés avec une fréquence d'extraction « fsd », et faire ensuite entrer les signaux extraits dans une interface de liaison descendante de radiofréquence de bande de base, dans lequel fw ≤ fsd < (128/75)*fw, et dans lequel « fw » est une largeur de bande de spectre de fréquence de la technologie LTE ; et
dans une direction de signal de liaison montante, du côté de radiofréquence au côté de bande de base, mettre en oeuvre, au niveau du côté de bande de base, une interpolation sur des signaux dont la fréquence est « fsu » qui proviennent d'une interface de liaison montante de radiofréquence de bande de base, filtrer les signaux interpolés pour ajouter des composantes de sous-porteuse à haute fréquence, dans lequel fw ≤ fsu < (128/75)*fw.

2. Procédé de traitement de signal pour un côté de station de base à technologie LTE selon la revendication 1, dans lequel l'étape de filtrage des signaux interpolés pour ajouter des composantes de sous-porteuse à haute fréquence consiste à : ajouter des composantes de sous-porteuse à haute fréquence en ajoutant « 0 » à des sous-porteuses à haute fréquence.

3. Procédé de traitement de signal pour un côté de station de base à technologie LTE selon la revendication 1 ou 2, dans lequel le procédé comprend spécifiquement les étapes ci-dessous consistant à :
dans la direction de signal de liaison descendante, mettre tout d'abord en oeuvre une transformée inverse de domaine fréquentiel sur des données modulées, mettre ensuite en oeuvre le traitement de filtrage de signal de liaison descendante et le traitement d'extraction, et envoyer ensuite des signaux à l'interface de liaison descendante de radiofréquence de bande de base ; et
dans la direction de signal de liaison montante, mettre tout d'abord en oeuvre l'interpolation sur des signaux qui proviennent de l'interface de liaison montante de radiofréquence de bande de base, mettre ensuite en oeuvre le traitement de filtrage de signaux de liaison montante interpolés, et mettre ensuite en oeuvre la transformée de domaine fréquentiel.

4. Procédé de traitement de signal pour un côté de station de base à technologie LTE selon la revendication 3, dans lequel,
la transformée inverse de domaine fréquentiel est une transformée de Fourier rapide inverse, IFFT, et la transformée de domaine fréquentiel est une transformée de Fourier rapide, FFT.

5. Procédé de traitement de signal pour un côté de station de base à technologie LTE selon la revendication 1 ou 2, dans lequel le procédé comprend les étapes ci-dessous consistant à :
dans la direction de signal de liaison descendante, mettre tout d'abord en oeuvre le traitement de filtrage de signal de liaison descendante sur des données modulées, et mettre ensuite en oeuvre une transformée inverse de domaine fréquentiel et mettre en oeuvre le traitement d'extraction, et envoyer ensuite des signaux à l'interface de liaison descendante de radiofréquence de bande de base ; et
dans la direction de signal de liaison montante, mettre tout d'abord en oeuvre l'interpolation sur des signaux qui proviennent de l'interface de liaison montante de radiofréquence de bande de base, mettre ensuite en oeuvre une transformée de domaine fréquentiel, et mettre ensuite en oeuvre le traitement de filtrage de signaux de liaison montante interpolés.

6. Dispositif de traitement de signal pour un côté de station de base à technologie d'évolution à long terme, LTE, **caractérisé en ce qu'**il comprend : un filtre de liaison descendante, un extracteur, un interpolateur, un filtre de liaison montante, un module de transformée inverse de domaine fréquentiel et un module de transformée de domaine fréquentiel ; dans lequel le filtre de liaison descendante, l'interpolateur et le module de transformée inverse de domaine fréquentiel sont définis sur un côté de bande de base dans une direction de signal de liaison descendante, du côté de bande de base à un côté de radiofréquence ; et l'interpolateur, le filtre de liaison montante et le module de transformée de domaine fréquentiel sont définis sur le côté de bande de base dans une direction de signal de liaison montante, du côté de radiofréquence au côté de bande de base ;
dans lequel le module de transformée inverse de domaine fréquentiel est configuré de manière à transformer des signaux du domaine fréquentiel au domaine temporel ;
le filtre de liaison descendante est configuré de manière à filtrer les signaux transformés afin d'éliminer des composantes de sous-porteuse à haute fréquence ;
l'extracteur est configuré de manière à extraire des signaux des signaux filtrés avec une fréquence d'extraction « fsd », dans lequel les signaux extraits entrent dans une interface de liaison descendante de radiofréquence de bande de base ;
dans lequel fw ≤ fsd < (128/75)*fw, et dans lequel « fw » est une largeur de bande de spectre de fréquence de la technologie LTE ; et
l'interpolateur est configuré de manière à mettre en oeuvre une interpolation sur des signaux dont la fréquence est « fsu » qui proviennent d'une interface de liaison montante de radiofréquence de bande de base ;
le filtre de liaison montante est configuré de manière à filtrer les signaux de liaison montante interpolés afin d'ajouter des composantes de sous-porteuse à haute fréquence ; et
le module de transformée de domaine fréquentiel est configuré de manière à transformer les signaux filtrés, du domaine temporel en domaine fréquentiel, dans lequel fw ≤ fsu < (128/75)*fw.

7. Dispositif de traitement de signal pour un côté de station de base à technologie LTE selon la revendication 6, dans lequel,
l'étape dans laquelle le filtre de liaison montante filtre les signaux de liaison montante interpolés en vue d'ajouter les composantes de sous-porteuse à haute fréquence consiste à : ajouter les composantes de sous-porteuse à haute fréquence en ajoutant « 0 » à des sous-porteuses à haute fréquence.

8. Dispositif de traitement de signal pour un côté de station de base à technologie LTE selon la revendication 6 ou 7, dans lequel,
dans la direction de signal de liaison descendante, le module de transformée inverse de domaine fréquentiel, le filtre de liaison descendante et l'extracteur sont réglés dans l'ordre ; et
dans la direction de signal de liaison montante, l'interpolateur, le filtre de liaison montante et le module de transformée de domaine fréquentiel sont réglés dans l'ordre.

9. Dispositif de traitement de signal pour un côté de station de base à technologie LTE selon la revendication 8, dans lequel,
le module de transformée inverse de domaine fréquentiel adopte une transformée de Fourier rapide inverse, IFFT, en vue de mettre en oeuvre une fonction de transformée inverse de domaine fréquentiel, et le module de transformée de domaine fréquentiel adopte une transformée de Fourier rapide, FFT, en vue de mettre en oeuvre une fonction de transformée de domaine fréquentiel.

10. Dispositif de traitement de signal pour un côté de station de base à technologie LTE selon la revendication 6 ou 7, dans lequel,
dans la direction de signal de liaison descendante, le filtre de liaison descendante, le module de transformée inverse de domaine fréquentiel et l'extracteur sont réglés dans l'ordre ; et
dans la direction de signal de liaison montante, l'interpolateur, le module de transformée de domaine fréquentiel et le filtre de liaison montante sont réglés dans l'ordre.
